# EUROPEAN PATENT SPECIFICATION

(11) **EP 2 687 412 B1**
(45) Date of publication and mention of the grant of the patent: **23.03.2016**
(21) Application number: 12005254.3
(22) Date of filing: 17.07.2012
(51) Int. Cl.: B60R 21/215, B60R 13/00

(54) **Cover for a gas bag module, a bag module with said cover, steering wheel and method of manufacturing said cover**
Abdeckung für ein Gasbeutelmodul, Gasbeutelmodul mit der Abdeckung, Lenkrad und Verfahren zur Herstellung der Abdeckung
Couvercle pour module de sac à gaz, module de sac avec ledit couvercle, volant et procédé de fabrication dudit couvercle

(43) Date of publication of application: 22.01.2014
(73) Proprietor: Dalphi Metal España, S.A., 28042 Madrid (ES)
(72) Inventor: Jonietz, Andreas, 36204 Vigo (ES); Garcia Rodriguez, José Luis, 36212 Vigo (ES); Pajón Fustes, Enrique, 36208 Vigo (ES)
(74) Representative: Mehnert, Bernhard

(56) References cited:
- EP-A1- 0 695 671
- EP-A1- 1 642 784
- EP-A2- 0 756 972
- EP-A2- 1 839 952
- US-A- 6 003 895
- US-A1- 2012 076 958
- US-B1- 6 209 905

## Description

The invention relates to a gas bag module with a cover including a decorative element having a front face and a rear face and a mounting element arranged on the rear face of the decorative element. The invention further relates to a steering wheel having said gas bag module and, additionally, to a method of manufacturing said gas bag module.

Typically, cars include a passenger restraint system which comprise gas bag modules, in particular airbag modules. The gas bag modules are often integrated in a steering wheel wherein a cover or cap is provided which encloses the gas bag module. The cover includes a decorative element having a front face which is visible to the vehicle occupant. Further, the cover usually includes a mounting element which is adapted to connect or secure the cover to a housing of the gas bag module. The decorative element of conventional gas bag covers is connected with the mounting element by rivets. Thus, it is necessary to provide the mounting element with a plurality of openings in which the rivets of the decorative element engage. Owing to the plurality of openings or apertures in the mounting element, the strength of the mounting element is reduced. Moreover, the creative leeway in forming the decorative element is limited since the decorative element must be designed to allow a rivet connection.

Alternatively, it is known to connect the decorative element to the mounting element by crimping and welding. In this case, the decorative element includes extensions which extend from the rear face of the decorative element and encompass the mounting element. The mounting element is then welded to the extensions of the decorative element. Such gas bag covers are difficult and complex to manufacture. Due to the extension which must be provided on the decorative element, the creative leeway is also limited.

US 6,209,905 B1 discloses a steering wheel cover having an emblem attached to the cover by injection molding. The cover includes a tear line that allows the cover to open in case of a gas bag module being activated and the gas bag being thus inflated and expanded. However, the known cover can be used only in combination with a specific gas bag module and, due to the tear line, the creative leeway for the emblem is limited.

It is an object of the present invention to provide a cover for a gas bag module which is easy and cost efficient to manufacture and which increases the scope for design of a decorative element. Further, it is an object of the present invention to provide a gas bag module and a steering wheel including such a cover and to provide a method of manufacturing such a cover.

The present invention is based on the idea to provide a gas bag module including a gas generator, a gas bag and a cover, the cover comprising a decorative element, in particular an emblem, having a front face and a rear face. The front face may be visible to a vehicle occupant when the cover is connected to the gas bag module. The cover further comprises a mounting element arranged on the rear face of the decorative element. The mounting element may be adapted for mounting the cover to a housing of the gas bag module. According to the invention, the mounting element is formed by over-molding the decorative element such that the mounting element is bonded directly to the decorative element, in particular by material engagement. The cover is loosely connected to a housing of the gas bag module and can be disconnected from the housing when the gas bag is inflated.

The cover of the gas bag module according to the present invention provides for a simple manufacturing, low production costs and uniform strength. Owing to the reduced number of independent parts, the cover provides for a reduced weight. Moreover, the cover can have different designs related both to different colours and a three-dimensional structure.

According to a preferred embodiment of the present invention, the decorative element and the mounting element comprise the same material in order to enhance the bonding connecting between the decorative element and the mounting element. Alternatively, the decorative element and the mounting element may comprise different materials. This allows for adaptability with respect to considering different customer needs such as to the design of the decorative element. For example, the decorative element may include metal design parts, in particular a metallic coating such as a chromium coating, which enhance the physical appearance of the cover whereas the mounting element is formed from a plastic material which allows for easy over-molding the decorative element and provides a reduced weight.

Preferably, the decorative element is formed of plastic film. This further allows for a plurality of options to design the decorative element. The plastic film may, in particular, comprise a decorated, preferably printed, surface. This provides a very flexible design of the cover. The plastic film may be easily exchangeable such that the design of the cover can quickly and easily be adapted to design change needs. Generally, using a plastic film as the decorative element increases the scope of design options. For example, the plastic film allows for a transmitted light design, in particular a day/night design, of the decorative element.

The decorated surface of the plastic film may be arranged on the front face of the decorative element. As such, the decorated surface is arranged facing the vehicle occupant. More preferably, the decorated surface is arranged on the rear face of the decorative element. Thus, the decoration is protected by the outside plastic film and additionally enables a very high gloss which is often desired from a design perspective. However, these advantages may also be achieved in cases of arranging the decorated surface on the front face of the decorative element if the decorated surface is coated with a transparent or translucent protective layer, e.g. transparent varnish or clear lacquer.

Preferably, the decorative element, in particular the plastic film, comprises a three-dimensional structure. The mounting element may fill cavities of said three-dimensional structure on the rear face of the decorative element. The three-dimensional structures are often desired for decorative elements such as emblems of automotive manufacturers of ornamental rings or the like. By filling the cavities of the three-dimensional structure on the rear face of the decorative element, i.e. by back filling the decorative element, the strength of the decorative element is enhanced.

According to a further aspect of the invention, a gas bag module, in particular driver side airbag module or passenger side airbag module, including a cover as described above is provided.

Another aspect of the present invention relates to a steering wheel for a motor vehicle including a cover or a gas bag module as described above.

The present invention also relates to a method of manufacturing a cover for a gas bag module wherein a decorative element, in particular an emblem, is provided and subsequently over-molded to create a mounting element directly bonded to the decorative element, in particular by material engagement, wherein means for mounting the mounting element to a housing of the gas bag module are formed during the step of over-molding the decorative element. Preferably, the mounting element is formed on a rear face of the decorative element. The rear face of the decorative element may be averted from a front face of the decorated element wherein the front face is visible to a vehicle occupant when the cover is integrated in a gas bag module for an occupant restraint system of a motor vehicle.

The method according to the present invention is characterised by a limited number of individual method steps, thus reducing the complexity of gas bag cover production and further increasing the quantity of covers manufactured within a specific timeframe.

In a preferred embodiment of the inventive method, the decorative element is formed of a plastic film and the step of providing the decorative element comprises printing a decor on the plastic film and/or preforming the plastic film into a three-dimensional shape.

Further, the step of providing a decorative element may comprise the steps of inserting the decorative element, in particular the plastic film, in a mold such that the front face of the decorative element contacts an entire inner surface of the mold and the rear face of the decorative element is spaced apart from the inner surface of the mold so as to provide an injection space between the rear face of the decorative element and the inner surface of the mold and injecting a plastic material into the injection space to create the mounting element.

The invention is described in further detail below with regard to the accompanying drawings in which
Fig. 1 shows a perspective view of a cover according to the present invention in a preferred embodiment;
Fig. 2 shows a section view of the cover according to Fig. 1; and
Fig. 3 shows a perspective view of a gas bag module including the cover according to Fig. 1.

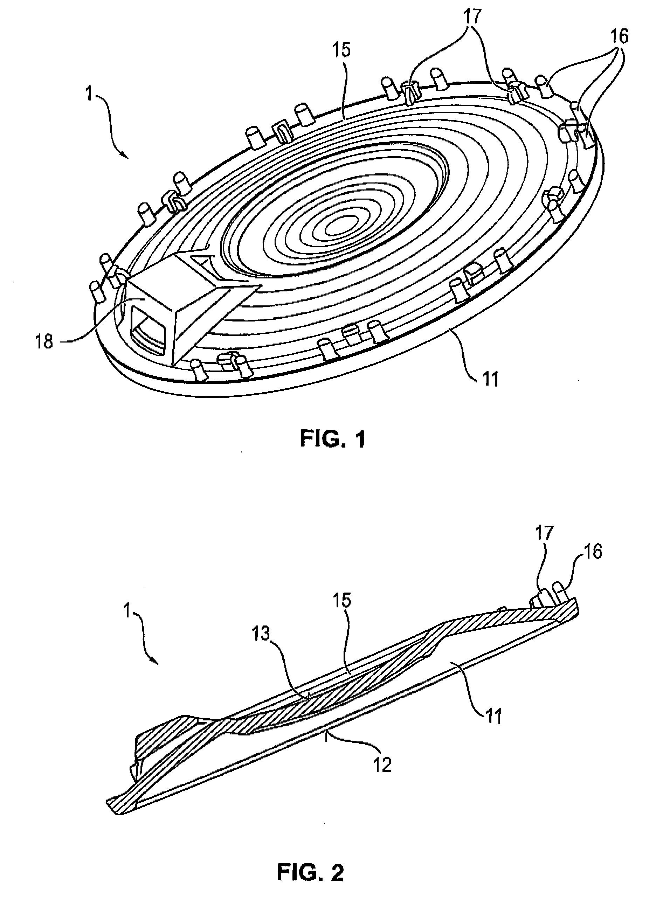

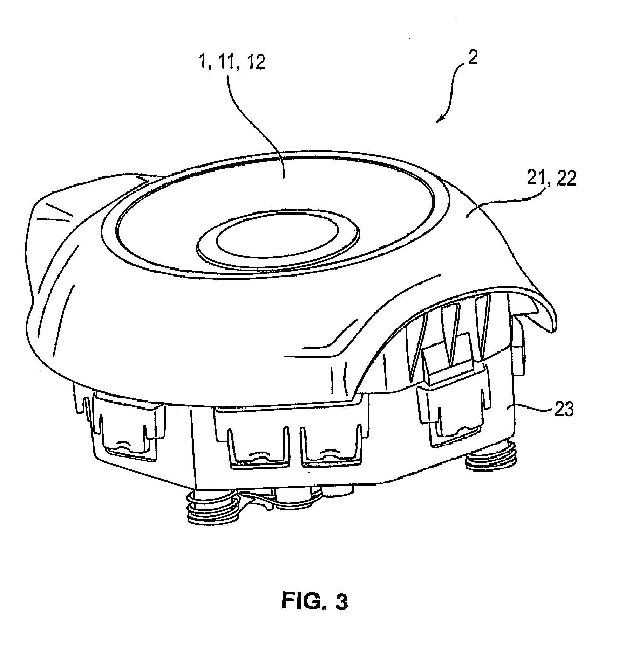

Figs. 1 and 2 show a cover for a gas bag module, also referred to as gas bag cover, according to a preferred embodiment of the invention. The gas bag cover 1 may be part of a vehicle occupant restraint system wherein the gas bag cover 1 covers a gas bag module 2 as shown in Fig. 3.

The gas bag module generally may include a gas generator and a gas bag. The cover 1 is adapted to be loosely connected to the gas bag module 2 in particular a housing 21 of the gas bag module 2. Thus, the gas bag cover 1 may be disconnected from the housing 21 when the gas bag is inflated.

Preferably, a cover according to Fig. 1 and 2 is used to cover a driver-side airbag module. Alternatively, the cover 1 may be designed and or adapted to cover a housing of a passenger-side airbag module.

The gas bag cover 1 generally includes a decorative element 11, in particular an emblem of an automotive manufacturer, and a mounting element 15 which is firmly bonded to the decorative element 11. The decorative element 11 has a front face 12 which faces a vehicle occupant when the cover 1 is mounted or integrated into a vehicle occupant restraint system. Further, the decorative element has a rear face which faces the gas bag module 2 in the mounted state. The mounting element 15 is bonded directly and firmly to the rear face 13 of the decorative element 11.

As shown in Fig. 1, the mounting element has a complex structure including positioning means 16 and fastening means 17. The positioning means 16 are formed by protuberances such as pins or bolts which are adapted to engage respective openings in the housing 21 of the gas bag module 2. The positioning means 16 extend from the mounting element 15 substantially perpendicular to the rear face 13 of the decorative element 11.

The fastening means 17 are preferably formed by snap-fits or engagement hooks which are adapted to engage to respective snap openings in the housing 21 of the gas bag module 2. Thus, the fastening means 17 allows for connecting the cover 1 to the gas bag module 2. The snap-fit connection between the cover 1 and the gas bag module 2 is adapted to allow the cover 1 to disengage from the gas bag module 2 when a gas bag (not shown) of the gas bag module 2 is inflated.

However, the mounting element 15 includes a tether receiving means 18 adapted to receive a tether (not shown) which may be firmly connected to the housing 21 of the gas bag module 2. The tether ensures that the cover 1 remains connected to the gas bag module 2 when the gas bag is inflated. That is, the cover 1 is not fully disconnected from the gas bag module 2 when the gas bag is inflated, but still tied to the gas bag module 2.

The mounting element 15 is manufactured by an injection molding process. In particular, the cover 1 is formed by a decorative element 11 which is over-molded or, respectively, back injection molded with a plastic material, the plastic material forming the mounting element 15. The step of injection molding the mounting element 15 also includes forming the positioning means 16, the fastening means 17 and the tether receiving means 18. That is, the mounting element 15, the positioning means 16, the fastening means 17 and the tether receiving means 18 are manufactured in one piece by back injection molding or over-molding the decorative element 11.

Fig. 3 shows a gas bag module 2 including the cover 1 of Figs. 1 and 2. The gas bag module generally comprises a housing 21 which is formed by an upper shell 22 and a lower shell 23. The upper shell 22 and the lower shell 23 are connected by a snap-fit connection. The gas bag cover 1 is received in a recess of the upper shell 22. That is, the upper shell 22 includes snap openings to receive the fastening means 17 of the cover's mounting element 15. The gas bag module 2 according to Fig. 3 is preferably adapted to be arranged on the driver side of a motor vehicle. In particular, the gas bag module 2 of Fig. 3 may be integrated in a steering wheel of a motor vehicle.

As discussed, manufacturing of the cover according to the present invention is performed by providing the decorative element 11 and subsequently over-molding or back injection molding the decorative element 11 in order to form the mounting element 15. In a more preferred embodiment, the decorative element 11 is formed of a plastic film, in particular a decorated film. The decorated film forms the optical surface of finished cover 1 or gas bag module 2. In particular, the plastic film may comprise a decorated surface and the decorated surface may be arranged on the front face 12 or the rear face 13 of the decorative element 11. If arranged on the rear face 13, it is preferred that the plastic film substantially includes a transparent material in order to allow the decorated surface to be visible from the front face 12 of the decorative element 11. The decorated surface may include a printing. That is, the plastic film may be printed prior to formation wherein the printing may include black/white-printing, greyscale printing or, more preferably, coloured printing. The printed surface of the plastic film corresponds to the decorated surface. Generally, the use of printed plastic film increases the scope of design possibilities for the decorative element 11. For example, the decorated surface may be monochrome, designed with special colours, in particular metallic effects, and/or may additionally include integrated symbols. Moreover, the decorated plastic film may be formed into a three-dimensional shape or structure which is often desired for decorative elements 11 such as emblems of automotive manufacturers. Prior or after forming the three-dimensional shape of the decorated film, the decorated film may be coated with a protective coating and/or a design coating, e.g. a chromium layer.

The decorated plastic film may be three-dimensionally shaped by mechanical forming, hydro forming, high pressure forming or other suitable cold plastic deformation methods. Alternatively, the decorated film may be shaped by heat forming, for example thermo forming with a stamp, high pressure thermo forming or thermo forming using a vacuum.

After the plastic film or, generally, the decorative element 11 has been three-dimensionally shaped, the decorative element 11 should be trimmed at the edges and recesses in order to remove injection mold remnants thus avoiding unclean edges of the injection molded part, i.e. the mounting element 15.

Subsequently, the trimmed plastic film or decorative element 11 is inserted into an injection mold wherein the front face of the decorative element 11 entirely contacts the inner surface of the injection mold. The rear face 13 of the decorative element 11, however, is spaced apart from the inner surface of the injection mold. Thus, an injection space is provided between the injection mold and the decorative element 11.

The injection space comprises the negative form of the mounting element 15 to be formed. Forming the mounting element 15 includes injecting a heated plastic material into the injection space, thus taking the form of the injection space. Thereby, the injected plastic material firmly bonds to the rear face 13 of the decorative element. Once the injected plastic material is cooled down, the finished cover 1 is ejected from the mold.

The method of manufacturing the cover 1 as described above opens up a variety of possibilities for the design of gas bag module covers.

## Claims

1. Gas bag module (2) including a gas generator, a gas bag and a cover (1), the cover comprising:
- a decorative element (11), in particular an emblem, having a front face (12) and a rear face (13), said front face (12) being visible when the cover (1) is connected to the gas bag module (2); and
- a mounting element (15) arranged on the rear face (13) of the decorative element (11), said mounting element (15) being adapted for mounting the cover (1) to a housing (21) of the gas bag module (2); wherein
said mounting element (15) is formed by over-molding the decorative element (11) such that the mounting element (15) is bonded directly to the decorative element (11), in particular by material engagement,
**characterised in that**
the cover (1) is loosely connected to a housing (21) of the gas bag module (2) such that the cover can be disconnected from the housing (21) when the gas bag is inflated.

2. Gas bag module (2) according to claim 1, wherein the decorative element (11) covers a front face of the cover (1) entirely.

3. Gas bag module (2) according to claim 1 or 2, wherein the decorative element (11) and the mounting element (15) comprise same or different materials.

4. Gas bag module (2) according to any of the preceding claims, wherein the decorative element (11) is formed of a plastic film.

5. Gas bag module (2) according to claim 4, wherein the plastic film comprises a decorated, in particular printed, surface, said decorated surface being arranged on the front face (12) or the rear face (13) of the decorative element (11).

6. Gas bag module (2) according to any of the preceding claims, wherein the decorative element (11), in particular the plastic film, comprises a three-dimensional structure and the mounting element (15) fills cavities of said three-dimensional structure on the rear face (13) of the decorative element (11).

7. Steering wheel for a motor vehicle including a gas bag module (2) according to any of the preceding claims.

8. Method of manufacturing the gas bag module (2) according to any of claims 1 to 6, wherein a decorative element (11), in particular an emblem, is provided and subsequently over-molded to create a mounting element (15) directly bonded to the decorative element (11), in particular by material engagement, wherein fastening means (17) for mounting the mounting element (15) to a housing (21) of the gas bag module (2) are formed during the step of over-molding the decorative element (11).

9. Method according to claim 8, wherein the decorative element (11) is formed of a plastic film and wherein the step of providing a decorative element (11) comprises printing a decor on the plastic film and/or preforming the plastic film into a three-dimensional shape.

10. Method according to claim 8 or 9, wherein the step of providing a decorative element (11) comprises following steps:
- inserting the decorative element (11), in particular the plastic film, in a mold such that the front face (12) of the decorative element (11) contacts an entire inner surface of the mold and the rear face (13) of the decorative element (11) is spaced apart from the inner surface of the mold so as to provide an injection space between the rear face (13) of the decorative element (11) and the inner surface of the mold and
injecting a plastic material into the injection space to create the mounting element (15).

## Patentansprüche

1. Gassackmodul (2) mit einem Gasgenerator, einem Gassack und einer Abdeckung (1), wobei die Abdeckung Folgendes umfasst:
- ein Zierelement (11), insbesondere ein Emblem, mit einer Vorderseite (12) und einer Rückseite (13), wobei die Vorderseite (12) sichtbar ist, wenn die Abdeckung mit dem Gassackmodul (2) verbunden ist; und
- ein Befestigungselement (15), das an der Rückseite (13) des Zierelements (11) angeordnet ist, wobei das Befestigungselement (15) zur Befestigung der Abdeckung (1) an einem Gehäuse (21) des Gassackmoduls (2) geeignet ist;
wobei
das Befestigungselement (15) durch Überspritzen des Zierelements (11) derart gebildet ist, dass das Befestigungselement (15) direkt mit dem Zierelement (11), insbesondere durch Materialeingriff, verbunden ist,
**dadurch gekennzeichnet, dass**
die Abdeckung (1) locker mit einem Gehäuse (21) des Gassackmoduls (2) derart verbunden ist, dass die Abdeckung von dem Gehäuse (21) gelöst werden kann, wenn der Gassack aufgeblasen wird.

2. Gassackmodul (2) gemäß Anspruch 1, wobei das Zierelement (11) eine Stirnfläche der Abdeckung (1) vollständig bedeckt.

3. Gassackmodul (2) gemäß Anspruch 1 oder 2, wobei das Zierelement (11) und das Befestigungselement (15) gleiche oder verschiedene Materialien umfassen.

4. Gassackmodul (2) gemäß einem der vorhergehenden Ansprüche, wobei das Zierelement (11) aus einer Kunststofffolie besteht.

5. Gassackmodul (2) gemäß Anspruch 4, wobei die Kunststofffolie eine verzierte, insbesondere bedruckte Oberfläche umfasst, wobei die verzierte Oberfläche auf der Vorderseite (12) oder der Rückseite (13) des Zierelements (11) angeordnet ist.

6. Gassackmodul (2) gemäß einem der vorhergehenden Ansprüche, wobei das Zierelement (11), insbesondere die Kunststofffolie, einen dreidimensionalen Aufbau umfasst und das Befestigungselement (15) Hohlräume des dreidimensionalen Aufbaus auf der Rückseite (13) des Zierelements (11) ausfüllt.

7. Lenkrad für ein Kraftfahrzeug mit einem Gassackmodul (2) gemäß einem der vorhergehenden Ansprüche.

8. Verfahren zur Herstellung des Gassackmoduls (2) gemäß einem der Ansprüche 1 bis 6, wobei ein Zierelement (11), insbesondere ein Emblem, bereitgestellt und anschließend überspritzt wird, um ein Befestigungselement (15) zu schaffen, dass unmittelbar mit dem Zierelement (11), insbesondere durch Materialeingriff, verbunden ist, wobei während des Schrittes des Überspritzens des Zierelements (11) Befestigungseinrichtungen (17) zum Anbringen des Befestigungselements (15) an einem Gehäuse (21) des Gassackmoduls (2) ausgebildet werden.

9. Verfahren gemäß Anspruch 8, wobei das Zierelement (11) aus einer Kunststofffolie besteht und wobei der Schritt des Bereitstellens eines Zierelements (11) das Drucken eines Dekors auf die Kunststofffolie und/oder das Vorformen der Kunststofffolie in eine dreidimensionale Form umfasst.

10. Verfahren gemäß Anspruch 8 oder 9, wobei der Schritt des Bereitstellens eines Zierelements (11) die folgenden Schritte umfasst:
- Einsetzen des Zierelements (11), insbesondere des Kunststofffilms, in eine Form, so dass die Vorderseite (12) des Zierelements (11) an einer gesamten Innenfläche der Form anliegt und die Rückseite (13) des Zierelements (11) von der Innenfläche der Form beabstandet ist, um einen Einspritzspalt zwischen der Rückseite (13) des Zierelements (11) und der Innenfläche der Form bereitzustellen, und
- Einspritzen eines Kunststoffmaterials in den Einspritzspalt, um das Befestigungselement (15) herzustellen.

## Revendications

1. Module airbag (2) comprenant un générateur de gaz, un coussin gonflable et un couvercle (1), le couvercle comprenant:
- un élément décoratif (11), en particulier un emblème, ayant une face avant (12) et une face arrière (13), ladite face avant (12) étant visible lorsque le couvercle (1) est relié au module airbag (2); et
- un élément de montage (15) disposé sur la face arrière (13) de l'élément décoratif (11), ledit élément de montage (15) étant adapté pour le montage du couvercle (1) à un boîtier (21) du module airbag (2); dans lesquels ledit élément de montage (15) est formée par surmoulage de l'élément décoratif (11) de telle sorte que l'élément de montage (15) est lié directement à l'élément décoratif (11), en particulier par liaison de matières,
**caractérisé en ce que**
le couvercle (1) est librement relié à un boîtier (21) du module airbag (2) de telle sorte que le couvercle peut être déconnecté du boîtier (21) lorsque le coussin gonflable est gonflé.

2. Module airbag(2) selon la revendication 1, dans lequel l'élément décoratif (11) recouvre une face avant du capot (1) entièrement.

3. Module airbag (2) selon les revendications 1 ou 2, dans lequel l'élément décoratif (11) et l'élément de montage (15) comprennent des matériaux identiques ou différents.

4. Module airbag (2) selon l'une quelconque des revendications précédentes, dans lequel l'élément décoratif (11) est formé d'un film de matière plastique.

5. Module airbag (2) selon la revendication 4, dans lequel le film de matière plastique comprend une surface décorée, en particulier imprimée, ladite surface décorée étant disposée sur la face avant (12) ou la face arrière (13) de l'élément décoratif (11).

6. Module airbag (2) selon l'une quelconque des revendications précédentes, dans lequel l'élément décoratif (11), en particulier le film de matière plastique, comprend une structure en trois dimensions et où l'élément de montage (15) remplit les cavités de ladite structure tridimensionnelle sur la face arrière (13) de l'élément décoratif (11).

7. Volant de direction pour un véhicule automobile comportant un module airbag (2) selon l'une quelconque des revendications précédentes.

8. Procédé de fabrication d'un module airbag (2) selon l'une quelconque des revendications 1 à 6, dans lequel un élément décoratif (11), en particulier un emblème, est prévu et est ensuite surmoulé pour créer un élément de montage (15) directement lié à l'élément décoratif (11), en particulier par liaison de matières, dans lequel des moyens de fixation (17) pour monter l'élément de montage (15) sur un boîtier (21) du module airbag (2) sont formés lors de l'étape de surmoulage l'élément décoratif (11).

9. Procédé selon la revendication 8, dans lequel l'élément décoratif (11) est formé d'un film de matière plastique et dans lequel l'étape de mise en place d'un élément décoratif (11) comprend l'impression d'un décor sur le film de matière plastique et/ou le préformage du film de matière plastique en une forme tridimensionnelle.

10. Procédé selon les revendications 8 ou 9, dans lequel l'étape de mise en place d'un élément décoratif (11) comprend les étapes suivantes:
- insertion de l'élément décoratif (11), en particulier le film de matière plastique, dans un moule de telle sorte que la face avant (12) de l'élément décoratif (11) est entièrement en contact avec une surface interne du moule et que la face arrière (13) de l'élément décoratif (11) est espacée de la surface intérieure du moule de manière à fournir un espace d'injection entre la face arrière (13) de l'élément décoratif (11) et la surface intérieure du moule et
- injection d'une matière plastique dans l'espace d'injection pour créer l'élément de montage (15).
